# FASCICULE DE BREVET EUROPEEN

(11) **EP 3 155 939 B1**
(45) Date de publication et mention de la délivrance du brevet: **24.07.2019**
(21) Numéro de dépôt: 16193168.8
(22) Date de dépôt: 10.10.2016
(51) Int. Cl.: A47J 37/10, A47J 45/06

(54) **PROCÉDÉ DE RÉALISATION D'UN SOUS-ENSEMBLE POIGNÉE D'UN RÉCIPIENT DE CUISSON**
VERFAHREN ZUR HERSTELLUNG EINES MODULS EINES GRIFFS FÜR KOCHBEHÄLTER
METHOD FOR PRODUCING A HANDLE SUB-ASSEMBLY FOR A COOKING VESSEL

(30) Priorité: 12.10.2015 FR 1559692
(43) Date de publication de la demande: 19.04.2017
(73) Titulaire: SEB S.A., 69130 Ecully (FR)
(72) Inventeur: MAGNOULOUX, Guy, 74330 EPAGNY (FR)
(74) Mandataire: Bourrières, Patrice

(56) Documents cités:
- EP-A1- 1 591 049
- WO-A1-2004/095994
- WO-A1-2008/119207
- DE-U1-202004 009 968
- US-A1- 2001 032 546

## Description

La présente invention concerne un procédé de réalisation d'un sous-ensemble poignée destiné à être assemblé sur une calotte pour former un récipient de cuisson, plus particulièrement un sous-ensemble poignée comportant un capteur de température. L'invention concerne également un sous-ensemble poignée et un récipient de cuisson comportant le sous-ensemble poignée, issu d'un tel procédé. Le récipient de cuisson est destiné à être disposé sur une plaque de cuisson, un brûleur ou analogue pour la cuisson d'aliments notamment une poêle, une casserole, une sauteuse, un faitout ou un autocuiseur.

On connaît des documents DE202004009968 et WO2004095994, un procédé de réalisation d'un sous-ensemble poignée destiné à être assemblé avec une calotte pour former un récipient de cuisson, le sous-ensemble comportant une poignée, un capteur de température muni de deux éléments conducteurs isolés qui sont reliés à un organe de connexion d'un circuit de contrôle, le sous-ensemble comprenant une zone de réception des éléments conducteurs dont une partie est agencée dans la poignée.

Les éléments conducteurs sont formés par des fils souples. Les éléments conducteurs comportent une première partie agencée dans la zone de réception et une deuxième partie libre à laquelle est relié le capteur. Lors de l'assemblage du sous-ensemble poignée sur la calotte, la deuxième partie souple et libre doit être soigneusement positionnée et maintenue, notamment lors du vissage de la poignée, pour que les éléments conducteurs ne soient pas pincés.

Ainsi, l'attention de la personne qui réalise l'assemblage doit être soutenue et il existe un risque important que les éléments conducteurs soient pincés, ce qui peut entrainer une coupure d'un ou des deux éléments conducteurs. En conséquence, le récipient de cuisson risque de ne plus comporter les fonctionnalités apportées par le capteur.

Le but de la présente invention est de remédier aux inconvénients précités et de proposer un procédé de réalisation d'un sous-ensemble poignée qui soit simple et économique à mettre en oeuvre.

Un autre but de l'invention est de proposer un sous-ensemble poignée muni d'un capteur, le tout assemblé sur un récipient de cuisson qui présente un fonctionnement fiable et répétitif, durable dans le temps.

Ces buts sont atteints avec un procédé de réalisation d'un sous-ensemble poignée destiné à être assemblé avec une calotte pour former un récipient de cuisson, ledit sous-ensemble comportant une poignée, un capteur, notamment un capteur de température, muni d'au moins un élément conducteur souple et isolé qui est relié à un organe de connexion d'un circuit de contrôle, ledit sous-ensemble comprenant une zone de réception de l'élément conducteur dont une partie est agencée dans la poignée, caractérisé en ce qu'il comprend successivement les étapes suivantes :
a) Réaliser la mise en place et la mise en tension de l'élément conducteur dans la zone de réception en exerçant une traction sur l'organe de connexion et/ou sur l'élément conducteur après avoir placé ledit élément conducteur dans un dispositif de frein agencé dans la poignée, le dispositif de frein autorisant un déplacement des éléments conducteurs dans le sens de la traction lorsque l'effort de traction dépasse un seuil prédéterminé,
b) Réaliser la mise en place de l'organe de connexion et/ou l'élément conducteur dans la poignée, la poignée comportant un logement de réception dans lequel une partie résiduelle de l'élément conducteur est disposée en formant au moins une boucle, le dispositif de frein empêchant alors le déplacement de l'élément conducteur dans le sens opposé au sens de la traction lors de la formation de la boucle.

Ainsi, l'élément conducteur souple est mis en tension dans la zone de réception qui est conçue pour que la position de l'élément conducteur souple soit figée, une fois celui-ci mis en tension. En conséquence, la personne qui réalise l'assemblage du sous-ensemble poignée sur la calotte n'a pas à se soucier de la position de l'élément conducteur.

Avantageusement, le dispositif de frein comporte un plot en silicone muni d'une fente calibrée, l'élément conducteur étant agencé dans la fente.

Le plot réalisé en silicone permet d'obtenir une pièce souple. La fente présente une largeur calibrée inférieure à la largeur de l'élément conducteur, qui peut notamment être un diamètre si l'élément conducteur est rond. Ainsi, le frottement de l'élément conducteur dans la fente assure un maintien en position de l'élément conducteur tant que l'effort de traction sur l'élément conducteur ne dépasse pas un seuil prédéterminé. De manière avantageuse, le plot est agencé dans la poignée pour maintenir la largeur de la fente.

De préférence, la poignée s'étend suivant une direction longitudinale, la partie de la zone de réception de l'élément conducteur agencée dans la poignée s'étendant majoritairement suivant la direction longitudinale et la fente étant alignée avec la partie de la zone de réception et l'effort de traction sur l'élément conducteur réalisé à l'étape a) est appliqué selon la direction longitudinale.

Ainsi, la mise en tension de l'élément conducteur permet sa mise en place dans la partie de la zone de réception agencée dans la poignée, la fente qui maintient l'élément conducteur étant alignée avec la partie de la zone de réception.

De préférence, l'effort pour pousser la partie résiduelle de l'élément conducteur dans le logement de réception est appliqué selon la direction longitudinale.

Ainsi, une fois l'élément conducteur mis en tension dans la zone de réception et maintenu par le dispositif de frein, la partie résiduelle est repoussée dans le logement de réception selon la direction longitudinale. L'élément conducteur est dimensionné pour plier sous l'application d'un effort de poussée inférieur au seuil prédéterminé de l'effort de traction du dispositif de frein qui permet un déplacement de l'élément conducteur.

De manière avantageuse, la poignée comporte une extrémité libre qui comprend une ouverture de réception de l'organe de connexion, l'organe de connexion étant assemblé selon la direction longitudinale pour pousser la partie résiduelle de l'élément conducteur dans le logement de réception.

Avantageusement, la poignée comporte un capot et le procédé comprend l'étape suivante avant l'étape a) :
c) réaliser la fixation du capot sur la poignée, ledit capot fermant la partie de la zone de réception de l'élément conducteur agencée dans la poignée et/ou assurant le maintien en position du dispositif de frein.

Ainsi, le capot permet de réaliser deux fonctions : fermer la partie de la zone de réception de l'élément conducteur agencée dans la poignée et assurer le maintien en position du dispositif de frein, ce qui est particulièrement économique.

De préférence, le sous-ensemble poignée comporte un support comprenant une première extrémité fixée à la poignée et une deuxième extrémité à laquelle est fixé le capteur, le support formant une partie de la zone de réception de élément conducteur et le procédé comprend les étapes suivantes avant l'étape a) :
- mettre en place le support sur la poignée,
- mettre en place le capteur sur le support,
- ranger l'élément conducteur dans la partie de la zone de réception.

Ainsi, le sous-ensemble poignée comporte un support rigide qui permet de positionner le capteur dans l'espace de manière connue et répétitive. Lors de l'étape de mise en tension de l'élément conducteur, la position de l'élément conducteur souple est figée dans la partie de la zone de réception de l'élément conducteur formée dans le support, en même temps que dans la partie de la zone de réception de l'élément conducteur formée dans la poignée. La position des composants du sous-ensemble poignée étant figée, notamment celle de l'élément conducteur, l'assemblage du sous-ensemble sur la calotte peut donc être facilement réalisé.

De manière particulièrement avantageuse, à partir d'un ensemble de composants communs, notamment la poignée, le capteur, l'élément conducteur, l'organe de connexion, le dispositif de frein, le capot, on peut réaliser une famille de sous-ensembles poignée destinés à être assemblés sur une famille de calottes, par exemple de tailles différentes, en utilisant un support spécifique pour chaque calotte. Le support spécifique permet d'adapter la position du capteur par rapport à la position de la poignée qui peut être différente à chaque taille de calotte.

On peut réaliser ainsi un pré-sous-ensemble poignée standard pour une famille de récipient de cuisson et le personnaliser juste avant son assemblage avec le support adapté à la taille de la calotte.

L'élément conducteur du sous-ensemble présente alors une longueur adaptée au montage du plus grand des supports d'une famille. Le logement de réception est dimensionné pour contenir la partie résiduelle de l'élément conducteur correspondant au montage du plus petit des supports de la famille.

De manière avantageuse, le support est réalisé en un matériau métallique, notamment un inox austénitique non ferromagnétique.

Le support réalisé en un matériau métallique est adapté à supporter les températures élevées, notamment à proximité du fond de la calotte. Un support réalisé en un inox austénitique non ferromagnétique permet, lors d'une utilisation du récipient de cuisson avec un moyen de chauffage par induction, d'obtenir un support qui ne couple pas avec le moyen de chauffage par induction.

Avantageusement, le capteur et une partie de l'élément conducteur sont encapsulés dans une enveloppe tubulaire métallique, le support comportant deux pattes formant un logement de réception de l'enveloppe tubulaire, et le procédé comprend à l'étape de mise en place du capteur sur le support, une opération d'insertion en force de l'enveloppe tubulaire dans le logement de réception, les deux pattes de fixation présentant un effet ressort de maintien de l'enveloppe tubulaire sur le support.

Cette disposition permet de réaliser l'assemblage du capteur sur le support sans ajouter de pièces supplémentaires, ce qui est particulièrement économique.

De préférence, la partie de la zone de réception de l'élément conducteur est formée par une partie de maintien de l'élément conducteur présentant une section transversale sensiblement constante, notamment en forme de U aplati, et par des pattes de maintien de l'élément conducteur et le procédé comprend à l'étape de rangement des éléments conducteurs dans la partie de la zone de réception une opération de pliage des pattes pour fermer la forme en U et former la partie de la zone de réception.

Cette disposition permet de réaliser la partie de la zone de réception de l'élément conducteur de manière simple et économique, notamment lorsque le support est réalisé à partir d'un feuillard métallique découpé pour comporter les pattes et mis en forme de U par frappe.

L'invention concerne également un sous-ensemble poignée tel que décrit par la revendication 10.

L'invention concerne également un récipient de cuisson comportant un sous-ensemble poignée assemblé sur une calotte, ledit sous-ensemble comportant une poignée, un capteur, notamment un capteur de température, muni d'au moins un élément conducteur souple et isolé qui est relié à un organe de connexion d'un circuit de contrôle, ledit sous-ensemble comprenant une zone de réception de l'élément conducteur dont une partie est agencée dans la poignée, ladite calotte comportant une paroi latérale et un fond dans lequel est agencé un logement de réception du capteur, la poignée étant fixée à la calotte par des moyens de fixation, le sous-ensemble poignée étant conforme au sous-ensemble poignée précédemment décrit.

Ainsi, le récipient de cuisson est issu de l'assemblage du sous-ensemble poignée sur la calotte, notamment suite à la mise en place du capteur dans son logement et à la fixation de la poignée sur la calotte.

De préférence, les moyens de fixation de la poignée sur la calotte comportent un goujon soudé à la calotte, ledit goujon coopérant avec un logement dans la poignée.

De préférence, l'article culinaire est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective éclatée d'un récipient de cuisson selon un mode particulier de réalisation de l'invention.
- La figure 2 illustre une vue en perspective du sous-ensemble poignée du récipient de cuisson de la figure 1.
- La figure 3 illustre une vue de détail en perspective éclatée du sous-ensemble poignée de la figure 2.
- La figure 4 illustre une vue en perspective du support qui est dans une position intermédiaire d'assemblage pour former le sous-ensemble poignée de la figure 2.
- La figure 5 illustre une vue en perspective éclatée du sous-ensemble poignée de la figure 2.
- La figure 6 illustre une vue de détail du dessus de l'extrémité libre de la poignée sans le capot du sous-ensemble poignée de la figure 2.

On notera que, dans ce document, les termes «horizontal», «vertical», «inférieur», «supérieur», «longitudinal», «transversal», «haut», «bas», employés pour décrire le récipient de cuisson, font référence à ce récipient de cuisson en situation d'usage, lorsqu'il est posé sur un plan horizontal.

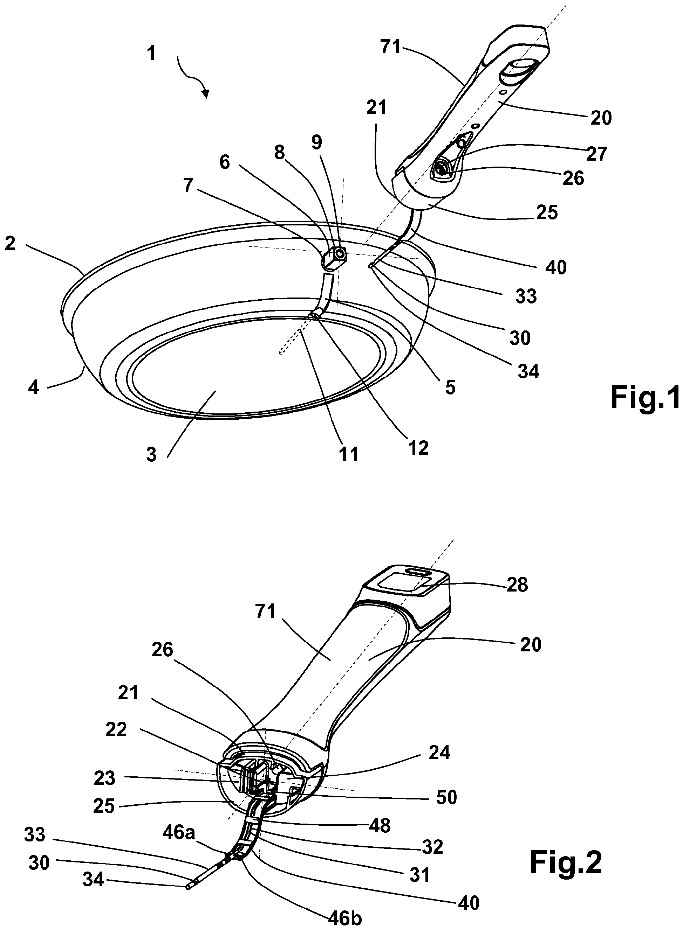

Tel que visible aux figures 1 et 2, un récipient de cuisson 1 comporte une calotte 2 comprenant un fond 3 et une paroi latérale 4. La calotte 2 est réalisée en aluminium, par exemple par frappe d'un disque ou par une opération de fonderie. Le fond 3 présente une épaisseur dans laquelle est agencé un logement de réception 11 d'un capteur 30. Le logement de réception 11 forme un tunnel qui comporte une ouverture 12 dans la paroi latérale 4 et qui s'étend, à partir de cette ouverture 12, radialement vers le centre du fond 3.

Le récipient de cuisson 1 comporte une poignée 20 qui s'étend radialement à la calotte 2 suivant une direction longitudinale. La poignée 20 est agencée sur la paroi latérale 4 de la calotte 2 par des moyens de fixation 6, 22. La calotte 2 comporte une partie des moyens de fixation formés par un goujon 6 soudé. Le goujon 6 présente une forme générale d'un parallélépipède rectangle qui comprend une première extrémité 7 adaptée à être fixée à la calotte 2, ainsi qu'une deuxième extrémité 8 comprenant un trou borgne taraudé 9.

La poignée 20 comporte une extrémité 21 munie d'une partie des moyens de fixation qui est formée par un logement 22 de réception du goujon 6. L'extrémité 21 de la poignée 20 comporte deux protubérances 23, 24 et une embase 25 entourant les deux protubérances 23, 24 qui forment le logement 22 de réception du goujon 6. L'extrémité 21 de la poignée 20 comporte un orifice 26 traversant épaulé, réalisé dans le prolongement du logement 22. L'orifice 26 est destiné à recevoir une vis 27 apte à coopérer avec le trou borgne taraudé 9 du goujon 6.

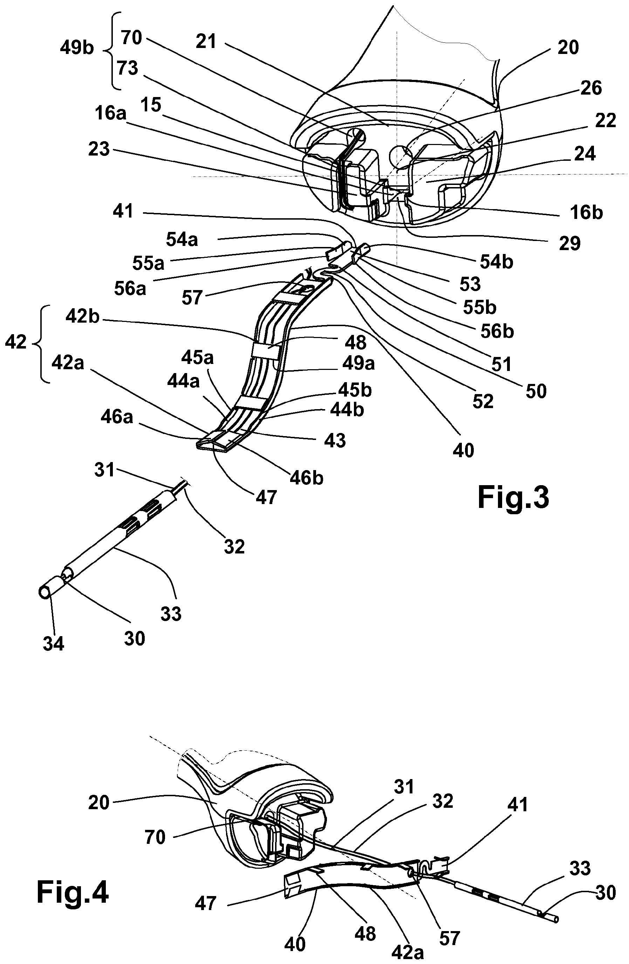

Tel que visible à la figure 3, le capteur 30 de température peut être formé par une CTN ou un thermocouple. Par CTN, on comprend une thermistance à Coefficient de Température Négatif. Le capteur 30 de température est muni de deux éléments conducteurs 31, 32 isolés qui sont agencés dans une enveloppe tubulaire 33 en acier inoxydable, obturée à une extrémité 34. Le capteur 30 de température est positionné au fond de l'enveloppe tubulaire 33, à proximité de l'extrémité 34 obturée. L'enveloppe tubulaire 33 est adaptée à être insérée complètement dans le logement de réception 11 pour que le capteur 30 soit maintenu en position de manière ajustée, quasiment sans jeu. Les éléments conducteurs 31, 32 sont reliés électriquement à un circuit de contrôle 28 (Fig. 2) apte à traiter la grandeur mesurée par le capteur de température. Le circuit de contrôle 28 est agencé dans la poignée 20 et peut comporter, par exemple, des moyens de traitement et d'affichage et/ou des moyens de communication avec un moyen de chauffage.

Conformément à la figure 3, le récipient de cuisson 1 comporte un support 40 comprenant, à une première extrémité, une partie de fixation 41 apte à coopérer avec un logement 29 agencé à l'extrémité 21 de la poignée 20. Le logement 29 présente une forme parallélépipédique et comporte une ouverture rectangulaire 15. Le logement 29 est agencé sous le logement 22 de réception du goujon 6. Le support 40 comporte une partie de maintien 42 de l'enveloppe tubulaire et des éléments conducteurs. La partie de maintien 42 comporte une partie de maintien 42a de l'enveloppe tubulaire 33 et une partie de maintien 42b des éléments conducteurs 31, 32. La partie de maintien 42a est agencée à une deuxième extrémité du support 40.

Le support 40 est fabriqué à partir d'un feuillard métallique, découpé puis mis en forme par frappe. La partie de maintien 42 de l'enveloppe tubulaire et des éléments conducteurs présente une section transversale en forme de U aplati, sensiblement constante. La section transversale présente une face plane 43 et deux bords latéraux 44a, 44b comprenant chacun, une extrémité libre 45a, 45b.

La partie de maintien 42a de l'enveloppe tubulaire 33 comporte deux pattes 46a, 46b qui s'étendent depuis les extrémités libres 45a, 45b des bords latéraux 44a, 44b, au-dessus de la face plane 43 pour former un logement 47 de réception de l'enveloppe tubulaire 33. Les deux pattes 46a, 46b de fixation présentent un effet ressort de maintien de l'enveloppe tubulaire 33 sur la face plane 43 du support 40.

La partie de maintien 42b des éléments conducteurs 31, 32 comporte des pattes 48 qui s'étendent depuis l'extrémité libre 45a du bord latéral 44a, au-dessus de la face plane 43 pour former une partie 49a d'une zone 49 de réception des éléments conducteurs 31, 32.

Le support 40 comporte une zone de déformation programmée 50 qui présente une forme en S. La forme en S est reliée par une première extrémité 51 à la partie de maintien 42 de l'enveloppe tubulaire et des éléments conducteurs et par une deuxième extrémité 52 à la partie de fixation 41 du support 40 qui est reliée à la poignée 20. La forme en S présente une section transversale rectangulaire.

Ainsi, la partie de maintien 42 de l'enveloppe tubulaire et des éléments conducteurs est mobile par rapport à la poignée 20, notamment dans une direction sensiblement verticale, perpendiculaire au plan dans lequel est comprise la forme en S.

La partie de fixation 41 du support 40 présente une section transversale en forme de U aplati qui comporte une face plane 53 et deux bords latéraux 54a, 54b. La forme en U aplati de la partie de fixation 41 est dimensionnée pour être insérée dans le logement 29 de la poignée 20. Deux languettes souples 55a, 55b s'étendent longitudinalement depuis les deux bords latéraux 54a, 54b, vers l'extérieur du U. Le support 40 comporte une zone de déformation programmée formée par les languettes souples 55a, 55b agencées en opposition sur la partie de fixation 41. Les languettes souples 55a, 55b comportent deux extrémités libres 56a, 56b qui coopèrent avec deux faces 16a, 16b d'appui opposées du logement 29 de la poignée 20. La face plane 53 du U aplati est comprise dans le plan dans lequel est comprise la forme en S.

La partie de fixation 41 du support 40 peut se déplacer dans son logement 29 transversalement à la direction longitudinale, dans une direction sensiblement horizontale. Ainsi, la partie de maintien 42 de l'enveloppe tubulaire et des éléments conducteurs est mobile par rapport à la poignée 20 dans une direction horizontale, perpendiculaire à la direction verticale.

Le support 40 comporte dans la face plane 43 une perforation 57. La perforation 57 est agencée à l'extrémité de la partie de maintien 42b des éléments conducteurs 31, 32, à proximité de la zone de déformation programmée 50. Les éléments conducteurs 31, 32 sont positionnés dans la perforation 57 pour passer de la partie 49a à une partie 49b de la zone 49 de réception des éléments conducteurs 31, 32.

La paroi latérale 4 comporte une rainure 5 (Fig. 1) s'étendant à partir de l'ouverture 12 du logement de réception 11 du capteur 30, vers le haut de la paroi latérale 4 jusque sous le goujon 6. La rainure 5 est destinée à recevoir le support 40, une fois la gaine tubulaire 33 introduite dans le logement de réception 11.

Tel que visible aux figures 3 et 4, les éléments conducteurs 31, 32 sont agencés dans le support 40 dans la partie 49a de la zone 49 de réception et dans la poignée 20 dans la partie 49b de la zone 49 de réception des éléments conducteurs 31, 32. La partie 49b s'étend dans la poignée majoritairement selon la direction longitudinale. La partie 49b comporte à l'extrémité 21 un conduit 70 (Fig.3) et un canal 73 de guidage des éléments conducteurs agencés à coté de la protubérance 23.

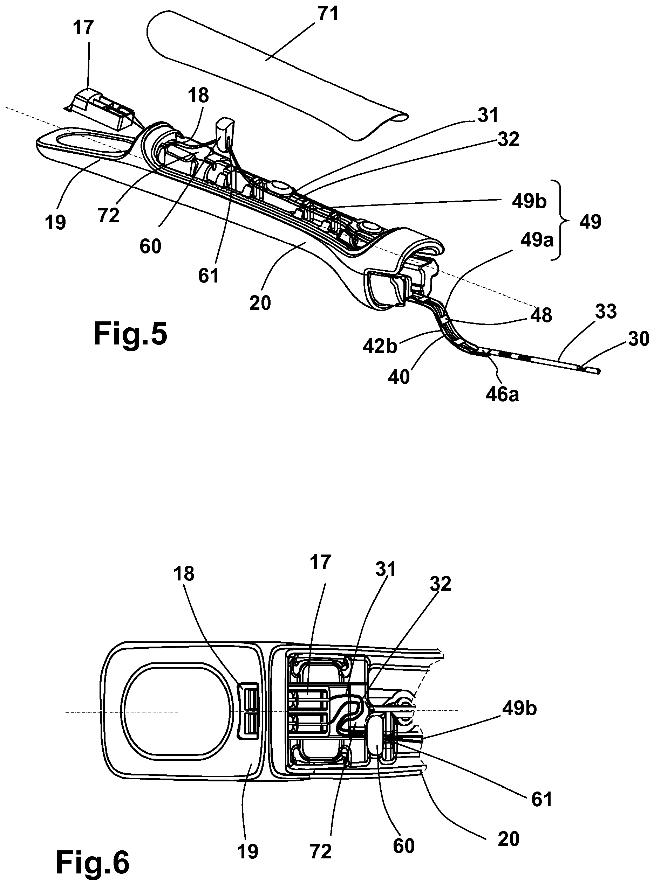

Conformément aux figures 5 et 6, un dispositif de frein 60 des éléments conducteurs 31, 32 est agencé dans la poignée 20. Le dispositif de frein est formé par un plot 60 en silicone qui comporte une fente 61. Les éléments conducteurs 31, 32 sont positionnés dans la fente 61 qui est orientée selon la direction longitudinale. Les éléments conducteurs 31, 32 sont reliés à un organe de connexion 17 du circuit de contrôle 28. La poignée 20 comporte une extrémité libre 19 munie d'une ouverture 18 qui s'étend selon la direction longitudinale. L'organe de connexion 17 est agencé dans l'ouverture 18. La poignée 20 comporte un logement de réception 72 d'une partie résiduelle des éléments conducteurs 31, 32 qui forment au moins une boucle. Le logement de réception 72 est agencé entre le plot 60 en silicone et l'organe de connexion 17. L'ouverture 18 débouche dans le logement de réception 72.

Un capot 71 est fixé sur la poignée 20. Le capot 71 recouvre la partie 49b de la zone 49 de réception des éléments conducteurs 31, 32, le logement de réception 72 de la partie résiduelle des éléments conducteurs 31, 32 et le plot 60 en silicone.

Le récipient de cuisson 1 comporte deux sous-ensembles qui peuvent être fabriqués indépendamment et réunis lors d'une opération d'assemblage final. Un premier sous-ensemble appelé sous-ensemble poignée est formé par la poignée 20 munie du logement 22 de réception du goujon 6, le support 40, les éléments conducteurs 31, 32 et le capteur 30 muni de son enveloppe tubulaire 33. Un deuxième sous-ensemble appelé sous-ensemble calotte est formé par la calotte 2 munie du goujon 6, du logement de réception 11 du capteur 30 et de la rainure 5.

Le procédé d'assemblage du sous-ensemble poignée comporte les étapes suivantes :
- Assembler le capteur 30 muni des éléments conducteurs 31, 32 dans la gaine tubulaire 33 et relier les éléments conducteurs 31, 32 à l'organe de connexion 17,
- Faire passer la gaine tubulaire 33 dans l'ouverture 18 de l'extrémité libre 19 de la poignée 20 puis faire passer la gaine tubulaire 33 dans le conduit 70,
- Introduire les éléments conducteurs 31, 32 dans la fente 61 du plot 60 en silicone puis positionner le plot 60 en silicone dans la poignée 20,
- Pré-positionner les éléments conducteurs 31, 32 dans la partie 49b de la zone 49 de réception et dans le logement de réception 72, une partie des éléments conducteurs 31, 32 et l'organe de connexion 17 dépassant de l'ouverture 18 et une partie des éléments conducteurs 31, 32 et la gaine tubulaire dépassant du conduit 70, puis fixer le capot 71 sur la poignée 20, notamment par collage.

On peut considérer qu'à ce stade de l'assemblage, on a réalisé un pré-sous-ensemble poignée standard pour une famille de récipient de cuisson.

Pour terminer le sous-ensemble poignée, le procédé d'assemblage comporte les étapes suivantes :
- Faire passer la gaine tubulaire dans la perforation 57 du support 40 (Fig. 4) et mettre en place la partie de fixation 41 dans le logement 29 de la poignée 20,
- insérer en force l'enveloppe tubulaire 33 dans le logement 47 de réception pour fixer le capteur 30 sur le support 40,
- ranger les éléments conducteurs 31, 32 dans la partie de maintien 42b et plier les pattes 48 pour former la partie 49a de la zone 49 de réception,
- Réaliser la mise en tension des éléments conducteurs 31, 32 dans la zone 49 de réception en exerçant une traction sur l'organe de connexion 17 et/ou sur les éléments conducteurs 31, 32, le dispositif de frein formé par le plot 60 autorisant un déplacement des éléments conducteurs dans le sens de la traction, la zone 49 de réception étant formée par la partie 49b dans la poignée 20 et par la partie 49a dans le support 40,
- Réaliser la mise en place de l'organe de connexion 17 dans l'ouverture 18 ainsi que la partie résiduelle des éléments conducteurs 31, 32 dans le logement de réception 72 de la poignée 20, la partie résiduelle des éléments conducteurs 31, 32 formant au moins une boucle, le dispositif de frein empêchant alors le déplacement des éléments conducteurs 31, 32 dans le sens opposé au sens de la traction lors de la formation de la boucle.

Lors de l'opération d'assemblage final, le logement 22 de la poignée 20 est assemblé de manière ajustée sur le goujon 6 et l'enveloppe tubulaire 33 est insérée de manière ajustée dans le logement de réception 11. Lors de cette opération, les zones de déformation programmée 50, 55a, 55b permettent d'absorber les dispersions dimensionnelles des deux sous-ensembles.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le dispositif de frein comporte une partie fixe appartenant à la poignée et une partie mobile à l'encontre d'un moyen de rappel élastique, l'élément conducteur étant agencé entre la partie fixe et la partie mobile. Le moyen de rappel élastique peut être formé notamment par un ressort.

## Revendications

1. Procédé de réalisation d'un sous-ensemble poignée destiné à être assemblé avec une calotte (2) pour former un récipient de cuisson (1), ledit sous-ensemble comportant une poignée (20), un capteur (30), notamment un capteur de température, muni d'au moins un élément conducteur (31, 32) souple et isolé qui est relié à un organe de connexion (17) d'un circuit de contrôle (28), ledit sous-ensemble comprenant une zone (49) de réception de l'élément conducteur (31, 32) dont une partie (49b) est agencée dans la poignée (20), **caractérisé en ce qu'**il comprend successivement les étapes suivantes :
a) Réaliser la mise en place et la mise en tension de l'élément conducteur (31, 32) dans la zone (49) de réception en exerçant une traction sur l'organe de connexion (17) et/ou sur l'élément conducteur (31, 32) après avoir placé ledit élément conducteur (31, 32) dans un dispositif de frein (60) agencé dans la poignée (20), le dispositif de frein (60) autorisant un déplacement de l'élément conducteur (31, 32) dans le sens de la traction lorsque l'effort de traction dépasse un seuil prédéterminé,
b) Réaliser la mise en place de l'organe de connexion (17) et/ou l'élément conducteur (31, 32) dans la poignée (20), la poignée (20) comportant un logement de réception (72) dans lequel une partie résiduelle de l'élément conducteur (31, 32) est disposée en formant au moins une boucle, le dispositif de frein (60) empêchant alors le déplacement de l'élément conducteur (31, 32) dans le sens opposé au sens de la traction lors de la formation de la boucle.

2. Procédé de réalisation d'un sous-ensemble poignée selon la revendication 1, **caractérisé en ce que** le dispositif de frein comporte un plot (60) en silicone muni d'une fente (61) calibrée, l'élément conducteur (31, 32) étant agencé dans la fente (61).

3. Procédé de réalisation d'un sous-ensemble poignée selon la revendication 2, **caractérisé en ce que** la poignée (20) s'étend suivant une direction longitudinale, la partie (49b) de la zone (49) de réception de l'élément conducteur (31, 32) agencée dans la poignée (20) s'étendant majoritairement suivant la direction longitudinale et la fente (61) étant alignée avec la partie (49b) et **en ce que** l'effort de traction sur l'élément conducteur (31, 32) réalisé à l'étape a) est appliqué selon la direction longitudinale.

4. Procédé de réalisation d'un sous-ensemble poignée selon la revendication 3, **caractérisé en ce que** l'effort pour pousser la partie résiduelle de l'élément conducteur (31, 32) dans le logement de réception (72) est appliqué selon la direction longitudinale.

5. Procédé de réalisation d'un sous-ensemble poignée selon la revendication 4, **caractérisé en ce que** la poignée (20) comporte une extrémité libre (19) qui comprend une ouverture (18) de réception de l'organe de connexion (17), l'organe de connexion (17) étant assemblé selon la direction longitudinale pour pousser la partie résiduelle de l'élément conducteur (31, 32) dans le logement de réception (72).

6. Procédé de réalisation d'un sous-ensemble poignée selon l'une quelconque des revendications précédentes, **caractérisé en ce que** la poignée (20) comporte un capot (71) et **en ce qu'**il comprend l'étape suivante avant l'étape a) :
c) Réaliser la fixation du capot (71) sur la poignée (20), ledit capot (71) fermant la partie (49b) de la zone (49) de réception de l'élément conducteur (31, 32) agencée dans la poignée (20) et/ou assurant le maintien en position du dispositif de frein (60).

7. Procédé de réalisation d'un sous-ensemble poignée selon l'une quelconque des revendications précédentes, **caractérisé en ce que** le sous-ensemble poignée comporte un support (40) comprenant une première extrémité fixée à la poignée (20) et une deuxième extrémité à laquelle est fixé le capteur (30), le support (40) formant une partie (49a) de la zone (49) de réception de l'élément conducteur (31, 32) et **en ce qu'**il comprend les étapes suivantes avant l'étape a):
- mettre en place le support (40) sur la poignée (20),
- mettre en place le capteur (30) sur le support (40),
- ranger l'élément conducteur (31, 32) dans la partie (49a) de la zone (49) de réception.

8. Procédé de réalisation d'un sous-ensemble poignée selon la revendication 7, **caractérisé en ce que** le capteur (30) et une partie de l'élément conducteur (31, 32) sont encapsulés dans une enveloppe tubulaire (33) métallique, le support (40) comportant deux pattes (46a, 46b) formant un logement (47) de réception de l'enveloppe tubulaire (33), et **en ce qu'**il comprend à l'étape de mise en place du capteur (30) sur le support (40), une opération d'insertion en force de l'enveloppe tubulaire (33) dans le logement (47) de réception, les deux pattes (46a, 46b) de fixation présentant un effet ressort de maintien de l'enveloppe tubulaire (33) sur le support (40).

9. Procédé de réalisation d'un sous-ensemble poignée selon l'une quelconque des revendications 7 ou 8, **caractérisé en ce que** la partie (49a) de la zone (49) de réception de l'élément conducteur (31, 32) est formée par une partie (42b) de maintien de l'élément conducteur (31, 32) présentant une section transversale sensiblement constante, notamment en forme de U aplati, et des pattes (48) de maintien de l'élément conducteur (31, 32) et **en ce qu'**il comprend à l'étape de rangement de l'élément conducteur (31, 32) dans la partie (49a) de la zone (49) de réception, une opération de pliage des pattes (48) pour fermer la forme en U et former la partie (49a) de la zone (49) de réception.

10. Sous-ensemble poignée destiné à être assemblé avec une calotte (2) pour former un récipient de cuisson (1), ledit sous-ensemble comportant une poignée (20), un capteur (30), notamment un capteur de température, muni d'au moins un élément conducteur (31, 32) souple et isolé qui est relié à un organe de connexion (17) d'un circuit de contrôle (28), ledit sous-ensemble comprenant une zone (49) de réception de l'élément conducteur (31, 32) dont une partie (49b) est agencée dans la poignée (20), **caractérisé en ce que** la poignée comporte un dispositif de frein (60) dans lequel est placé ledit élément conducteur (31, 32) pour sa mise en tension dans la zone (49) de réception en exerçant une traction sur l'organe de connexion (17) et/ou sur l'élément conducteur (31, 32), le dispositif de frein (60) autorisant un déplacement de l'élément conducteur (31, 32) dans le sens de la traction lorsque l'effort de traction dépasse un seuil prédéterminé et **en ce que** la poignée comporte un logement de réception (72) dans lequel une partie résiduelle de l'élément conducteur (31, 32) est disposée en formant au moins une boucle, le dispositif de frein (60) empêchant alors le déplacement de l'élément conducteur (31, 32) dans le sens opposé au sens de la traction lors de la formation de la boucle, ledit sous ensemble poignée étant réalisé par le procédé selon l'une quelconque des revendications précédentes.

11. Récipient de cuisson comportant un sous-ensemble poignée assemblé sur une calotte (2), ledit sous-ensemble comportant une poignée (20), un capteur (30), notamment de température, muni d'au moins un élément conducteur (31, 32) souple et isolé qui est relié à un organe de connexion (17) d'un circuit de contrôle (28), ledit sous-ensemble comprenant une zone (49) de réception de l'élément conducteur (31, 32) dont une partie (49b) est agencée dans la poignée (20), ladite calotte (2) comportant une paroi latérale (4) et un fond (3) dans lequel est agencé un logement de réception (11) du capteur (30), la poignée (20) étant fixée à la calotte (2) par des moyens de fixation (6, 22), **caractérisé en ce que** le sous-ensemble poignée est conforme à la revendication 10.

## Patentansprüche

1. Verfahren zur Realisierung einer Griffunterbaugruppe, die dazu bestimmt ist, mit einer Kalotte (2) zusammengesetzt zu werden, um ein Kochgefäß (1) zu bilden, wobei die Unterbaugruppe einen Griff (20), einen Sensor (30), insbesondere einen Temperatursensor, aufweist, der mit mindestens einem leitenden Element (31, 32) versehen ist, das flexibel und isoliert ist und mit einem Verbindungsorgan (17) einer Steuerschaltung (28) verbunden ist, wobei die Unterbaugruppe einen Bereich (49) zur Aufnahme des leitenden Elements (31, 32) umfasst, von dem ein Abschnitt (49b) in dem Griff (20) angeordnet ist, **dadurch gekennzeichnet, dass** es nacheinander die folgenden Schritte umfasst:
a) Realisieren der Platzierung und Unterspannungsetzen des leitenden Elements (31, 32) in dem Bereich (49) zur Aufnahme durch Ausüben eines Zugs auf das Verbindungsorgan (17) und / oder auf das leitende Element (31, 32), nachdem das leitende Element (31, 32) in einer in dem Griff (20) angeordneten Bremsvorrichtung (60) platziert wurde, wobei die Bremsvorrichtung (60) eine Verschiebung des leitenden Elements (31, 32) in der Zugrichtung ermöglicht, wenn die Zugkraft eine vorgegebene Schwelle überschreitet,
b) Realisieren des Platzierens des Verbindungsorgans (17) und / oder des leitenden Elements (31, 32) in dem Griff (20), wobei der Griff (20) ein Gehäuse zur Aufnahme (72) aufweist, in dem ein verbleibender Abschnitt des leitenden Elements (31, 32) angeordnet wird, indem mindestens eine Schleife gebildet wird, wobei die Bremsvorrichtung (60) somit die Verschiebung des leitenden Elements (31, 32) in der der Zugrichtung entgegengesetzten Richtung während der Bildung der Schleife verhindert.

2. Verfahren zur Realisierung einer Griffunterbaugruppe nach Anspruch 1, **dadurch gekennzeichnet, dass** die Bremsvorrichtung einen Klotz (60) aus Silikon umfasst, der mit einem kalibrierten Schlitz (61) versehen ist, wobei das leitende Element (31, 32) in dem Schlitz (61) angeordnet ist.

3. Verfahren zur Realisierung einer Griffunterbaugruppe nach Anspruch 2, **dadurch gekennzeichnet, dass** sich der Griff (20) in einer Längsrichtung erstreckt, wobei der Abschnitt (49b) des Bereichs zur Aufnahme (49) des leitenden Elements (31, 32), das in dem Griff (20) angeordnet ist, sich überwiegend in der Längsrichtung erstreckt, und wobei der Schlitz (61) mit dem Abschnitt (49b) ausgerichtet ist, und dass die Zugkraft auf das leitende Element (31, 32), die in dem Schritt a) realisiert wird, in Längsrichtung angewandt wird.

4. Verfahren zur Realisierung einer Griffunterbaugruppe nach Anspruch 3, **dadurch gekennzeichnet, dass** die Kraft zum Drücken des verbleibenden Abschnitts des leitenden Elements (31, 32) in das Aufnahmegehäuse (72) in der Längsrichtung angewandt wird.

5. Verfahren zur Realisierung einer Griffunterbaugruppe nach Anspruch 4, **dadurch gekennzeichnet, dass** der Griff (20) ein freies Ende (19) aufweist, das eine Öffnung (18) zur Aufnahme des Verbindungsorgans (17) umfasst, wobei das Verbindungsorgan (17) in Längsrichtung zusammengebaut ist, um den verbleibenden Abschnitt des leitenden Elements (31, 32) in das Gehäuse zur Aufnahme (72) zu drücken.

6. Verfahren zur Realisierung einer Griffunterbaugruppe nach einem der vorhergehenden Ansprüche, **dadurch gekennzeichnet, dass** der Griff (20) eine Abdeckung (71) aufweist, und dass es den folgenden Schritt vor Schritt a) umfasst:
c) Realisieren der Befestigung der Abdeckung (71) auf dem Griff (20), wobei die Abdeckung (71) den Abschnitt (49b) des Bereichs (49) zur Aufnahme des leitenden Elements (31, 32) umschließt, der in dem Griff (20) angeordnet ist und / oder das Halten der Bremsvorrichtung (60) in Position sicherstellt.

7. Verfahren zur Realisierung einer Griffunterbaugruppe nach einem der vorhergehenden Ansprüche, **dadurch gekennzeichnet, dass** die Griffunterbaugruppe einen Träger (40) aufweist, der ein an dem Griff (20) befestigtes erstes Ende und ein an dem Griff befestigtes zweites Ende umfasst, an dem der Sensor (30) befestigt ist, wobei der Träger (40) einen Abschnitt (49a) des Bereichs zur Aufnahme (49) des leitenden Elements (31, 32) bildet, und dass es die folgenden Schritte vor dem Schritt a) umfasst:
- Platzieren des Trägers (40) auf dem Griff (20),
- Platzieren des Sensors (30) auf dem Träger (40),
- Anordnen des leitenden Elements (31, 32) in dem Abschnitt (49a) des Bereichs (49) zur Aufnahme.

8. Verfahren zur Realisierung einer Griffunterbaugruppe nach Anspruch 7, **dadurch gekennzeichnet, dass** der Sensor (30) und ein Abschnitt des leitenden Elements (31, 32) in einer metallischen rohrförmigen Umhüllung (33) eingekapselt sind, wobei der Träger (40) zwei Laschen (46a, 46b) aufweist, die ein Gehäuse (47) zur Aufnahme der rohrförmigen Umhüllung (33) bilden, und dass es in dem Schritt des Platzierens des Sensors (30) auf dem Träger (40) eine Operation zur gewaltsamen Einsetzung der rohrförmigen Umhüllung (33) in das Gehäuse zur Aufnahme (47) umfasst, wobei die beiden Laschen (46a, 46b) zur Befestigung eine Federwirkung zum Halten der rohrförmigen Umhüllung (33) auf dem Träger (40) vorweisen.

9. Verfahren zur Realisierung einer Griffunterbaugruppe nach einem der Ansprüche 7 oder 8, **dadurch gekennzeichnet, dass** der Abschnitt (49a) des Bereichs (49) zur Aufnahme des leitenden Elements (31, 32) durch einen Abschnitt (42b) zum Halten des leitenden Elements (31, 32) gebildet ist, das einen im Wesentlichen konstanten Querschnitt, insbesondere in Form eines abgeflachten U, und Laschen (48) zum Halten des leitenden Elements (31, 32) vorweist, und dass es in dem Schritt des Aufbewahrens des leitenden Elements (31, 32) in dem Abschnitt (49a) des Bereichs zur Aufnahme (49) eine Operation zum Falten der Laschen (48) umfasst, um die U-Form zu schließen und den Abschnitt (49a) des Bereichs zur Aufnahme (49) zu bilden.

10. Griffunterbaugruppe, die dazu bestimmt ist, mit einer Kalotte (2) zusammengesetzt zu werden, um ein Kochgefäß (1) zu bilden, wobei die Unterbaugruppe einen Griff (20), einen Sensor (30), insbesondere einen Temperatursensor, aufweist, der mindestens mit einem leitenden Element (31, 32) versehen ist, das flexibel und isoliert ist und mit einem Verbindungsorgan (17) einer Steuerschaltung (28) verbunden ist, wobei die Unterbaugruppe einen Bereich (49) zur Aufnahme des leitenden Elements (31, 32) umfasst, von dem ein Abschnitt (49b) in dem Griff (20) angeordnet ist, **dadurch gekennzeichnet, dass** der Griff eine Bremsvorrichtung (60) aufweist, in der das leitende Element (31, 32) platziert ist, um es in dem Bereich (49) zur Aufnahme unter Spannung zu setzen, indem ein Zugauf das Verbindungsorgan (17) und /oderdas leitende Element (31, 32) ausgeübt wird, wobei die Bremsvorrichtung (60) eine Verschiebung des leitenden Elements (31, 32) in der Richtung des Zugs ermöglicht, während die Zugkraft eine vorbestimmte Schwelle überschreitet, und dass der Griff ein Gehäuse zur Aufnahme (72) aufweist, in dem ein verbleibender Abschnitt des leitenden Elements (31, 32) angeordnet ist, indem mindestens eine Schleife gebildet wird, wobei die Bremsvorrichtung (60) somit die Verschiebung des leitenden Elements (31, 32) in der der Zugrichtung entgegengesetzten Richtung während der Bildung der Schleife verhindert, wobei die Griffunterbaugruppe durch das Verfahren nach einem der vorhergehenden Ansprüche realisiert wird.

11. Kochgefäß, aufweisend eine auf einer Kalotte (2) angeordnete Griffunterbaugruppe, wobei die Unterbaugruppe einen Griff (20), einen Sensor (30), insbesondere einen Temperatursensor, aufweist, der mit mindestens einem leitenden Element (31, 32) versehen ist, das flexibel und isoliert ist und mit einem Verbindungsorgan (17) einer Steuerschaltung (28) verbunden ist, wobei die Unterbaugruppe einen Bereich (49) zur Aufnahme des leitenden Elements (31, 32) umfasst, von dem ein Abschnitt (49b) in dem Griff (20) angeordnet ist, wobei die Kalotte (2) eine Seitenwand (4) und einen Boden (3) aufweist, in dem ein Gehäuse zur Aufnahme (11) des Sensors (30) angeordnet ist, wobei der Griff (20) an der Kalotte (2) durch Befestigungsmittel (6, 22) befestigt ist, **dadurch gekennzeichnet, dass** die Griffunterbaugruppe gemäß Anspruch 10 ist.

## Claims

1. Method for producing a handle sub-assembly intended to be assembled with a cap (2) to form a cooking vessel (1), said sub-assembly comprising a handle (20), a sensor (30), in particular a temperature sensor, provided with at least one flexible and insulated conducting element (31, 32) connected to a connection member (17) of a control circuit (28), said sub-assembly comprising a reception zone (49) of the conducting element (31, 32), one part (49b) of which is arranged in the handle (20), **characterised in that** it comprises the following successive steps:
a) Installing and tensioning the conducting element (31, 32) in the reception zone (49) by exerting a tensile force on the connection member (17) and/or on the conducting element (31, 32) after having placed said conducting element (31, 32) in a braking device (60) arranged in the handle (20), the braking device (60) authorising a displacement of the conducting element (31, 32) in the direction of the tensile force, when the tensile force exceeds a predetermined threshold,
b) Installing the connection member (17) and/or the conducting element (31, 32) in the handle (20), the handle (20) comprising a reception housing (72) wherein a residual part of the conducting element (31, 32) is arranged by forming at least one loop, the braking device (60) thus preventing the displacement of the conducting element (31, 32) in the opposite direction of the direction of the tensile force during the forming of the loop.

2. Method for producing a handle sub-assembly according to claim 1, **characterised in that** the braking device comprises a silicone pad (60) provided with a calibrated slot (61), the conducting element (31, 32) being arranged inside the slot (61).

3. Method for producing a handle sub-assembly according to claim 2, **characterised in that** the handle (20) extends along a longitudinal direction, the part (49b) of the reception zone (49) of the conducting element (31, 32) arranged inside the handle (20) extending predominantly along the longitudinal direction and the slot (61) being aligned with the part (49b), and **in that** the tensile force on the conducting element (31, 32) exerted in step a) is applied along the longitudinal direction.

4. Method for producing a handle sub-assembly according to claim 3, **characterised in that** the force to push the residual part of the conducting element (31, 32) in the reception housing (72) is applied along the longitudinal direction.

5. Method for producing a handle sub-assembly according to claim 4, **characterised in that** the handle (20) comprises a free end (19) comprising an opening (18) for receiving the connection member (17), the connection member (17) being assembled along the longitudinal direction to push the residual part of the conducting element (31, 32) in the reception housing (72).

6. Method for producing a handle sub-assembly according to any one of the preceding claims, **characterised in that** the handle (20) comprises a cover (71) and **in that** it comprises the following step prior to step a):
c) Attaching the cover (71) on the handle (20), said cover (71) closing the part (49b) of the reception zone (49) of the conducting element (31, 32) arranged inside the handle (20) and/or holding the braking device (60) in position.

7. Method for producing a handle sub-assembly according to any one of the preceding claims, **characterised in that** the handle sub-assembly comprises a support (40) comprising a first end secured to the handle (20) and a second end to which the sensor (30) is secured, the support (40) forming a part (49a) of the reception zone (49) of the conducting element (31, 32) and **in that** it comprises the following steps prior to step a):
- installing the support (40) on the handle (20),
- installing the sensor (30) on the support (40),
- storing the conducting element (31, 32) in the part (49a) of the reception zone (49).

8. Method for producing a handle sub-assembly according to claim 7, **characterised in that** the sensor (30) and a part of the conducting element (31, 32) are encased in a metallic tubular shell (33), the support (40) comprising two tabs (46a, 46b) forming a reception housing (47) of the tubular shell (33), and **in that** it comprises, during the step of installing the sensor (30) on the support (40), a force-fitting operation of the tubular shell (33) in the reception housing (47), the two fastening tabs (46a, 46b) providing a spring effect maintaining the tubular shell (33) on the support (40).

9. Method for producing a handle sub-assembly according to any one of claims 7 or 8, **characterised in that** the part (49a) of the reception zone (49) of the conducting element (31, 32) is formed by a part (42b) to maintain the conducting element (31, 32) with a substantially constant transversal section, in particular in the shape of a flattened U, and retaining tabs (48) of the conducting element (31, 32), and **in that** it comprises during the step of storing the conducting element (31, 32) in the part (49a) of the reception zone (49), an operation whereby the tabs (48) are folded to close the U shape and form the part (49a) of the reception zone (49).

10. Handle sub-assembly intended to be assembled with a cap (2) to form a cooking vessel (1), said sub-assembly comprising a handle (20), a sensor (30), in particular a temperature sensor, provided with at least one flexible and insulated conducting element (31, 32) connected to a connection member (17) of a control circuit (28), said sub-assembly comprising a reception zone (49) of the conducting element (31, 32), one part (49b) of which is arranged in the handle (20), **characterised in that** the handle comprises a braking device (60) wherein is placed said conducting element (31, 32) for its tensioning in the reception zone (49) by exerting a tensile force on the connection member (17) and/or on the conducting element (31, 32), the braking device (60) authorising a displacement of the conducting element (31, 32) in the direction of the tensile force when the tensile force exceeds a predetermined threshold and **in that** the handle comprises a reception housing (72) wherein a residual part of the conducting element (31, 32) is arranged by forming at least one loop, the braking device (60) thereby preventing the displacement of the conducting element (31, 32) in the direction opposite the direction of the tensile force during the forming of the loop, said handle sub-assembly being produced with the method according to any one of the preceding claims.

11. Cooking vessel comprising a handle sub-assembly assembled on a cap (2), said sub-assembly comprising a handle (20), a sensor (30), in particular a temperature sensor, provided with at least one flexible and insulated conducting element (31, 32) connected to a connection member (17) of a control circuit (28) said sub-assembly comprising a reception zone (49) of the conducting element (31, 32), a part (49b) of which is arranged in the handle (20), said cap (2) comprising a side wall (4) and a bottom (3) wherein is arranged a reception housing (11) of the sensor (30), the handle (20) being secured to the cap (2) by fastening means (6, 22), **characterised in that** the handle sub-assembly complies with claim 10.
